# FASCICULE DE BREVET EUROPEEN

(11) **EP 0 864 790 B1**
(45) Date de publication et mention de la délivrance du brevet: **24.09.2003**
(21) Numéro de dépôt: 98400491.1
(22) Date de dépôt: 02.03.1998
(51) Int. Cl.: F16K 11/078

(54) **Disques pour cartouche de mitigeur et cartouche les comportant**
Scheiben für eine Mischerpatrone und damit ausgestattete Patrone
Mixer cartridge disks and cartridge comprising them

(30) Priorité: 14.03.1997 FR 9703104
(43) Date de publication de la demande: 16.09.1998
(73) Titulaire: Norton Desmar-Quest Fine Ceramics, 92400 Courbevoie (FR)
(72) Inventeur: Delaisement, Yves, 94440 Villecresnes (FR); Caruso, Valérie, 92110 Clichy (FR)
(74) Mandataire: Santarelli

(56) Documents cités:
- EP-A- 0 648 963
- DE-A- 2 947 228
- DE-A- 3 202 040
- GB-A- 2 108 634
- GB-A- 2 192 256

## Description

L'invention concerne une paire de disques, en pratique en céramique, pour cartouche de mitigeur à écoulements séparés, ainsi qu'une cartouche la comportant.

Comme on le sait, une cartouche de mitigeur est un ensemble destiné à être mis en place dans un logement prévu dans un corps de robinet muni de deux voies d'arrivée d'eau froide et d'eau chaude, respectivement et d'au moins une voie d'évacuation.

Assez souvent le mélange des eaux chaude et froide se fait à l'intérieur même de la cartouche. Toutefois, dans certains cas, il est prévu que les écoulements d'eau froide et d'eau chaude ne se mélangent qu'à la sortie de la cartouche voire du bec de robinet. On parle alors de cartouche à écoulements séparés.

Une cartouche de mitigeur, à écoulements séparés ou non, comporte classiquement deux disques superposés dont l'un est fixe, et l'autre mobile en position et en orientation par rapport au disque fixe, sous l'action d'un levier unique, orientable par l'intermédiaire d'une poignée par rapport au corps de robinet. En principe, le levier est mobile autour de deux axes de rotation : une rotation autour d'un premier axe agit sur le volume de l'écoulement sortant du robinet, tandis qu'une rotation autour du second axe agit sur la température du mélange effectué à la sortie de ce robinet.

Un exemple de cartouche de mitigeur à écoulements séparés (couramment dénommée « *bi-flow* » en anglais) est décrit dans le document GB-2.192.256. Il y est décrit un corps de robinet dont le logement est formé de deux chambres, à savoir une chambre inférieure communiquant par deux canaux avec la sortie du bec de robinet, et le logement proprement dit de la cartouche, séparé de la première chambre par une paroi horizontale et comportant une paroi verticale de séparation dans laquelle sont ménagés quatre canaux d'axes coplanaires (deux canaux d'arrivée de fluide et deux canaux de sortie latéralement ouverts). Le fond de la cartouche comporte quatre lumières adaptées à être en communication avec les quatre canaux d'arrivée et de sortie de fluide. Un disque fixe monté dans la cartouche comporte quatre lumières sensiblement alignées suivant un diamètre (de manière à pouvoir être mis en communication avec les quatre lumières d'entrée et de sortie prévues dans le fond de la cartouche) mais ayant une forme sensiblement allongée circonférentiellement autour d'une portion centrale de ce disque. Un disque mobile appliqué contre ce disque fixe comporte deux évidements, traversant ou non, qui, en fonction de la position et/ou de l'orientation de ce disque mobile par rapport au disque fixe (par action sur un levier unique), mettent, ou non, en communication, les lumières d'entrée et de sortie d'eau froide d'une part, et les lumières d'entrée et de sortie d'eau chaude d'autre part.

Les deux évidements ont sensiblement des formes en demi-lune (c'est-à-dire sont des portions de disque).

Il est apparu que l'«alignement» des quatre lumières de cette cartouche connue conduit en pratique à des difficultés lorsque l'on veut réduire le diamètre des disques fixe et mobile, tout en gardant des débits maximaux substantiels et un grand débattement angulaire du disque mobile.

L'invention a pour objet de répondre à cet objectif, grâce à un couple de disques, en pratique en céramique, capable de permettre au choix un écoulement d'eau froide seul, un écoulement d'eau chaude seul ou deux écoulements simultanés d'eau froide et d'eau chaude, ces écoulements pouvant être substantiels malgré un faible diamètre de ces disques, tout en autorisant que le débattement en rotation du disque mobile entre une configuration d'écoulement d'eau froide uniquement et une configuration d'écoulement d'eau chaude uniquement soit important, typiquement supérieur à 90°. Cet objet se généralise à tout autre couple de fluides.

L'invention propose à cet effet une paire de disques de mitigeur à écoulements séparés comportant un premier disque destiné à être fixe et un second disque destiné à être mobile en position et en orientation par rapport à ce premier disque en ayant une surface plane appliquée contre une surface plane de ce premier disque,
ce premier disque étant traversé par de première, seconde, troisième et quatrième lumières, dont la seconde lumière et la troisième lumière ont des formes circonférentiellement allongées en étant intérieurement tangentes à un premier cercle de référence, et la première lumière est située entre la seconde lumière et la troisième lumière, en étant située radialement entre le centre de ce premier cercle de référence et cette seconde lumière,
et ce second disque comportant de premier et second évidements débouchant dans la surface plane de ce second disque, en sorte de mettre en communication, ou non, les première et seconde lumières, d'une part, et/ou les troisième et quatrième lumières, d'autre part, en fonction de la position et de l'orientation du second disque,
cette paire de disques étant caractérisée en ce que :
   - les seconde et troisième lumières sont sensiblement disposées à l'opposé l'une de l'autre par rapport au centre de ce premier cercle de référence,
   - la quatrième lumière a une forme circonférentiellement allongée sensiblement tangente intérieurement à ce premier cercle de référence en étant décalée de la troisième lumière dans un premier sens angulaire,
   - les premier et second évidements sont intérieurement tangents à un second cercle de référence, le second évidement ayant une forme circonférentiellement allongée avec une première zone terminale et une seconde zone terminale décalée de cette première zone terminale dans un second sens angulaire opposé au premier sens angulaire, et le premier évidement s'étendant à partir du centre radialement de ce second cercle de référence à l'opposé de la première zone terminale,
ces lumières et ces évidements ayant des dimensions telles qu'il existe, lorsque les premier et second cercles de référence sont concentriques :
   - une orientation intermédiaire du disque mobile dans laquelle le premier évidement chevauche radialement les première et seconde lumières et le second évidement chevauche circonférentiellement les troisième et quatrième lumières,
   - une première orientation extrême décalée par rapport à l'orientation intermédiaire dans le premier sens angulaire, dans laquelle le second évidement chevauche les troisième et quatrième lumières sans que le premier évidement ne chevauche les première et seconde lumières, et
   - une seconde orientation extrême décalée par rapport à l'orientation intermédiaire dans le second sens angulaire, dans laquelle le premier évidement chevauche les première et seconde lumières sans que le second évidement ne chevauche les troisième et quatrième lumières.

On appréciera notamment le fait que, selon l'invention, l'un des évidements met deux lumières en communication par chevauchement radial, tandis que l'autre évidement met les deux autres lumières en communication par chevauchement circonférentiel ; c'est cette différence de mode de chevauchement, différente de la solution connue où le chevauchement est, dans les deux cas, radial, qui permet une réduction substantielle de l'encombrement, tout en permettant des évacuations séparées de l'eau froide et de l'eau chaude hors de la cartouche, avec des débits substantiels.

Selon des dispositions préférées de l'invention éventuellement combinées :
- les première et seconde orientations extrêmes ont, par rapport à l'orientation intermédiaire, des écarts angulaires sensiblement égaux,
- les deux cercles de référence ont des diamètres sensiblement égaux,
- le premier cercle de référence est concentrique au disque fixe, et le second cercle de référence a un centre décalé par rapport au centre du disque mobile à l'opposé du rayon selon lequel s'étend le premier évidement,
- la première lumière est sensiblement tangente au centre du premier cercle de référence,
- le premier évidement est sensiblement tangent au centre du second cercle de référence,
- la première lumière est symétrique par rapport à un rayon du premier cercle de référence et la seconde lumière est décalée angulairement par rapport à ce rayon dans le premier sens angulaire,
- la quatrième lumière est délimitée intérieurement par un bord sensiblement parallèle à ce rayon,
- la première lumière est allongée transversalement à ce rayon,
- la première lumière a une forme elliptique dont le petit axe s'étend suivant ledit rayon,
- la seconde lumière est délimitée latéralement par des tronçons sensiblement rectilignes dont l'un au moins est sensiblement radial,
- la seconde lumière est délimitée intérieurement par un bord sensiblement concentrique au premier cercle de référence,
- la troisième lumière est délimitée latéralement par des tronçons sensiblement rectilignes dont l'un au moins est sensiblement radial,
- la troisième lumière est délimitée intérieurement par un tronçon sensiblement rectiligne,
- la quatrième lumière a la forme d'une portion de lune et est délimitée extérieurement par un bord qui, au moins à proximité de la troisième lumière, s'écarte du premier cercle de référence vers le tronçon sensiblement rectiligne,
- l'amplitude angulaire de la seconde lumière est supérieure à l'amplitude angulaire de la troisième lumière,
- le premier évidement est sensiblement symétrique par rapport au rayon le long duquel il s'étend,
- le premier évidement comporte des bords latéraux parallèles au rayon le long duquel il s'étend,
- le second évidement est délimité latéralement par des bords sensiblement rectilignes dont l'un au moins est sensiblement radial,
- les seconde et troisième lumières son décalées, à l'opposé de la quatrième lumière, d'une valeur angulaire d'environ 15° et le second évidement a une amplitude angulaire d'environ 130° à 160°,
- la quatrième lumière est décalée angulairement de la seconde lumière d'environ 10° à 20°, et est décalée de la troisième lumière d'environ 10° à 20°,
- l'écart angulaire entre les orientations extrêmes du disque mobile est supérieur à 90°;
- cet écart angulaire est de l'ordre de 110°,
- le premier sens angulaire est le sens des aiguilles d'une montre et le second sens angulaire est le sens trigonométrique, et
- un ensemble pour la commande en orientation et en position du disque mobile.

L'invention vise également une cartouche de mitigeur à écoulements séparés comportant une telle paire de disques.

Les objets, caractéristiques et avantages de l'invention ressortent de la description qui suit donnée à titre d'exemples non limitatifs, en regard des dessins annexés sur lesquels :
- la figure 1 est une vue de dessus d'un premier disque destiné à être fixe,
- la figure 2 est une vue de dessus d'un second disque destiné à être mobile en position et en orientation par rapport au premier disque,
- la figure 3 est une vue de dessus de l'ensemble des premier et second disques, le second disque ayant une orientation intermédiaire et une position correspondant à un débit nul,
- la figure 4 est une vue de dessus des deux disques superposés, le second disque ayant la même orientation qu'à la figure 3, mais ayant une position correspondant à deux débits séparés,
- la figure 5 est une vue de dessus des deux disques superposés, le disque mobile ayant une première orientation extrême, et une position correspondant à un débit nul,
- la figure 6 est une vue de dessus des deux disques, le disque mobile ayant la même orientation qu'à la figure 5, mais ayant une position correspondant à un débit substantiel de l'un seul des fluides,
- la figure 7 est une vue de dessus des deux disques superposés, le second disque étant dans une seconde orientation extrême, et en une position correspondant à un débit nul,
- la figure 8 est une vue de dessus des deux disques superposés, le disque mobile ayant la même orientation qu'à la figure 7, mais ayant une position correspondant à un débit substantiel de l'autre fluide seulement,
- la figure 9 est une vue de dessus d'un autre premier disque destiné à être fixe,
- la figure 10 est une vue de dessus d'un autre second disque destiné à être mobile le long du disque de la figure 9,
- la figure 11 est une vue en perspective éclatée d'une cartouche comportant les disques des figures 9 et 10,
- la figure 12 est une vue de dessous du fond de cette cartouche, et
- la figure 13 est une vue de dessus de ce fond combiné à une pièce intermédiaire sur laquelle le disque fixe de la figure 9 vient porter.

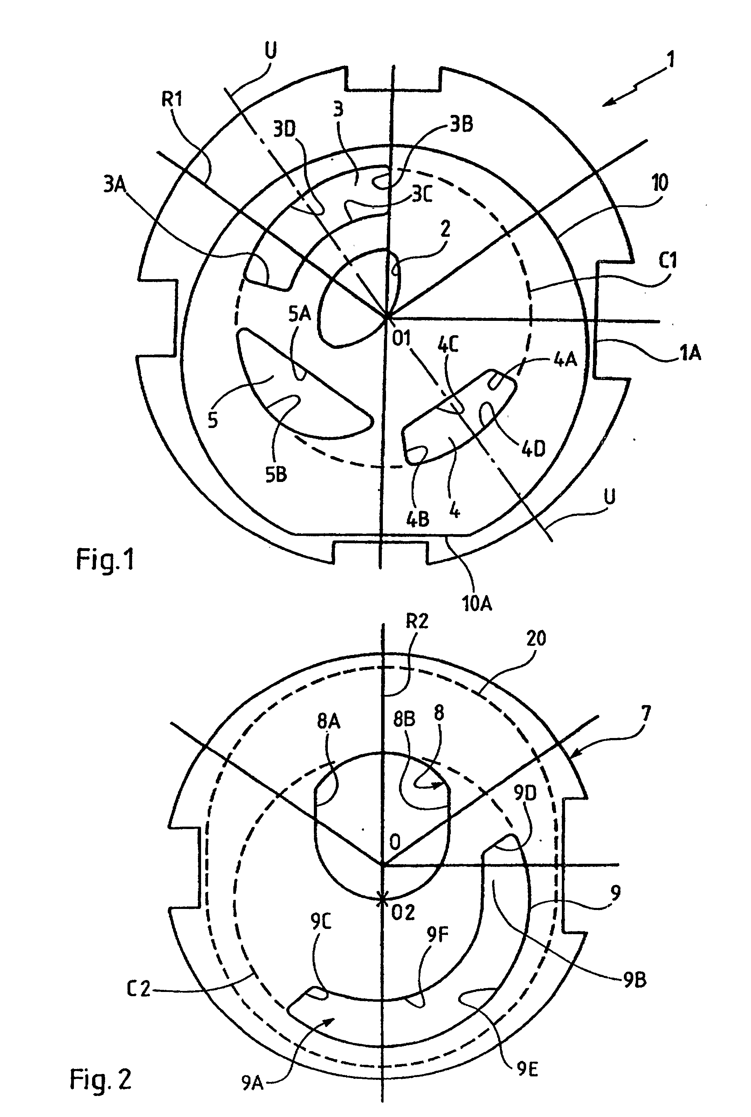

La figure 1 représente en vue de dessus un premier disque 1 destiné à être fixe par rapport à une cartouche de robinet mitigeur à écoulements séparés. Ce disque comporte en quatre zones décalées de 90° des encoches 1A destinées à permettre son immobilisation à l'intérieur de la cartouche.

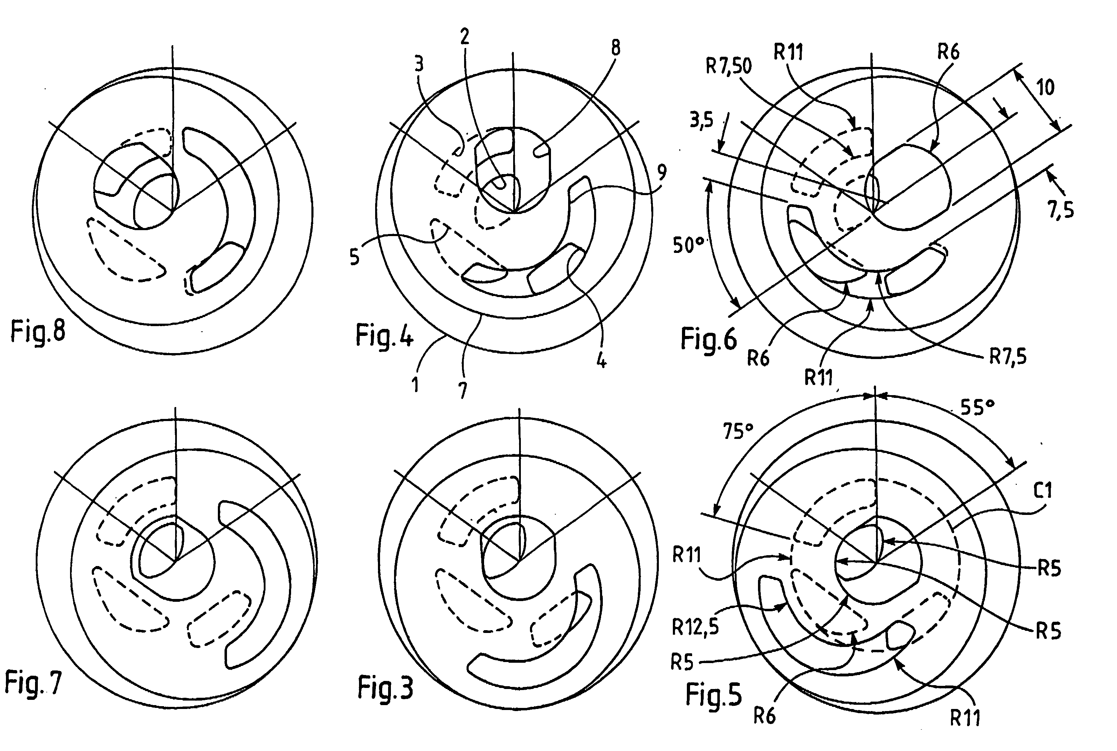

Ce premier disque comporte une surface portante destinée à être affrontée à une surface portante correspondante d'un second disque 7 représenté à la figure 2.

Cette surface portante est délimitée par un bord repéré 10, dont la forme est sensiblement circulaire, avec toutefois un méplat 10A, et dont le centre (non représenté) est décalé par rapport au centre O1 du disque 1.

Dans ce disque sont ménagées quatre lumières respectivement repérées 2, 3, 4 et 5. La première lumière 2 est destinée à être mise en communication, ou non, avec la lumière 3 en fonction de la position et de l'orientation du disque mobile 7 ; et la troisième lumière 4 et la quatrième lumière 5 sont destinées à être mises en communication, ou non, en fonction de la position et de l'orientation de ce disque mobile 7.

A titre d'exemple :
- la lumière 2 est destinée à être mise en communication avec une arrivée d'eau froide ménagée dans un corps de robinet destiné à recevoir une cartouche comportant les disques des figures 1 et 2,
- la lumière 3 est destinée à être mise en communication avec une voie de sortie d'eau froide ménagée dans ce corps,
- la lumière 4 est destinée à être mise en communication avec une voie d'entrée d'eau chaude, ménagée dans le corps, et
- la lumière 5 est destinée à être mise en communication avec une voie de sortie d'eau chaude.

Bien entendu, les rôles respectifs de ces lumières peuvent être intervertis, en fonction de la configuration du corps de robinet dans lequel une cartouche comportant ces disques est destinée à être incorporée. En outre les fluides dont les écoulements sont commandés par la parie de disques 1 et 7 peuvent ne pas être de l'eau.

La seconde lumière 3 et la troisième lumière 4 ont des formes circonférentiellement allongées en étant intérieurement tangentes à un premier cercle de référence C1. La première lumière 2 est située entre la seconde lumière et la troisième lumière, en étant située radialement, pour l'essentiel, entre le centre O1 de ce premier cercle de référence et cette seconde lumière.

Ces seconde et troisième lumières 3 et 4 sont sensiblement disposées à l'opposée l'une de l'autre par rapport au centre O1.

La quatrième lumière 5 a une forme circonférentiellement allongée sensiblement tangente intérieurement à ce premier cercle de référence C1, en étant décalée de la troisième lumière 4 dans un premier sens angulaire, correspondant ici au sens des aiguilles d'une montre.

Le premier cercle de référence C1 est ici concentrique au disque fixe, de sorte que son centre O1 est confondu avec le centre du disque fixe.

La première lumière est sensiblement tangente au centre O1 de ce premier cercle de référence C1. Cette première lumière 2 est avantageusement symétrique par rapport à un rayon R1 de ce premier cercle de référence, et la seconde lumière 3 est décalée angulairement par rapport à ce rayon R1 dans le premier sens angulaire (donc ici dans le sens des aiguilles d'une montre). Puisque la troisième lumière 4 est située à l'opposé de la seconde lumière par rapport au centre du premier cercle de référence C1, cette troisième lumière est également décalée par rapport à R1, c'est-à-dire que cette troisième lumière 4 est décalée par rapport à un rayon prolongeant ce rayon R1, dans ce premier sens angulaire.

Plus précisément, cette première lumière 2 est ici allongée transversalement à R1. Elle a une forme avantageusement elliptique dont le petit axe s'étend suivant ce rayon R1. En conséquence le grand axe de cette forme elliptique s'étend transversalement à ce rayon.

La seconde lumière 3 est délimitée latéralement par des tronçons sensiblement rectilignes, ici radiaux, 3A et 3B. Cette seconde lumière 3 est en outre avantageusement délimitée, intérieurement, par un bord 3C sensiblement concentrique au cercle de référence C1. Quant au bord radialement opposé repéré 3D, il est sensiblement tangent sur toute sa longueur au cercle de référence R1.

La troisième lumière est délimitée latéralement par des tronçons sensiblement rectilignes, ici radiaux, 4A et 4B. Elle est avantageusement délimitée intérieurement par un tronçon sensiblement rectiligne 4C, tandis que son bord radialement extérieur repéré 4D longe sensiblement le cercle de référence C1 sur toute sa longueur.

On peut trouver pour chacune des seconde et troisième lumières 3 et 4 des axes radiaux de symétrie ; dans la mesure où ces deux lumières sont disposées radialement à l'opposé, ces axes radiaux de symétrie sont dans le prolongement l'un de l'autre. Ces axes radiaux sont identifiés sous la référence UU à la figure 1.

La quatrième lumière 5 est délimitée intérieurement par un bord interne 5A qui est sensiblement parallèle au rayon R1.

Cette quatrième lumière est délimitée extérieurement par un bord 5B qui à proximité de la troisième lumière 4 s'écarte du cercle de référence C1 vers l'intérieur, jusqu'au bord sensiblement rectiligne 5A. Cette quatrième lumière, délimitée par ces deux seuls bords a ainsi la forme d'une portion de lune.

L'amplitude angulaire de la seconde lumière 3 est de préférence supérieure à l'amplitude angulaire de la troisième lumière 4.

A titre d'exemple, dans l'exemple de la figure 1, la lumière 3 a une amplitude angulaire d'environ 75° tandis que la troisième lumière 4 a une amplitude angulaire de 55° par référence au centre 01.

Tel que représenté à la figure 2 le second disque, repéré 7, est lui aussi de forme sensiblement circulaire. Toutefois son diamètre est inférieur au diamètre du disque 1 de la figure 1 de manière à permettre un déplacement de ce disque 7 par rapport au disque 1, non seulement en rotation (ou orientation) mais aussi en translation par rapport à divers rayons.

Ce disque mobile comporte une surface portante délimitée par une ligne 20 représentée en pointillé, puisque la surface portante est une surface cachée à la figure 2. Ce second disque comporte de premier et second évidements 8 et 9 débouchant dans la surface portante de ce second disque, sans nécessairement traverser toute l'épaisseur de ce second disque : il s'agit de préférence de trous borgnes ; en variante, ces évidements peuvent être traversant auquel cas selon des dispositions connues, pour éviter que l'eau circulant dans ces évidements ne vienne mouiller l'ensemble de la cartouche, un disque couvre-disque (parfois appelé « entraîneur ») peut être prévu au sein de la cartouche pour isoler ces évidements vis-à-vis du reste de la cartouche.

Ces premier et second évidements 8 et 9 sont intérieurement tangents à un second cercle de référence C2, le second évidement 9 ayant une forme circonférentiellement allongée avec une première zone terminale 9A et une seconde zone terminale 9B décalée de cette première zone terminale 9A dans un second sens angulaire opposé au premier sens angulaire. Dans le cas présent ce second sens angulaire est donc ici le sens trigonométrique.

Le premier évidement 8 s'étend à partir du centre 02 du cercle de référence C2 à l'opposé de la première zone terminale 9A.

Le centre 02 de ce second cercle de référence est ici décalé par rapport au centre O du second disque 7.

Ce décalage est avantageusement en direction de la première zone terminale 9A.

Les deux cercles de référence C1 et C2 des deux disques ont avantageusement des diamètres au moins approximativement égaux.

Le premier évidement 8 est, de manière préférée, sensiblement tangent au centre 02 du second cercle de référence C2.

Ce premier évidement est ici sensiblement symétrique par rapport à un rayon R2 le long duquel il s'étend ; il est avantageusement délimité latéralement par des bords latéraux 8A et 8B parallèles au rayon R2.

Le second évidement 9 est délimité latéralement par des bords 9C et 9D sensiblement rectilignes, ici radiaux.

Ce second évidement a une dimension radiale qui est maximale en une portion médiane située entre les zones terminales 9A et 9B, et qui diminue en direction de celles-ci. Plus précisément, ce second évidement est délimité extérieurement par un bord 9E sensiblement tangent au cercle de référence C2, tandis que le bord intérieur 9F a un centre situé au delà du centre 02 du cercle de référence C2.

On appréciera que ces lumières et ces évidements ont des dimensions telles qu'il existe lorsque les premier et second cercles de référence sont concentriques :
- une orientation intermédiaire du disque mobile (figures 3 et 4) dans laquelle le premier évidement 8 chevauche radialement les première et seconde lumières et le second évidement 9 chevauche circonférentiellement les troisième et quatrième lumières,
- une première orientation extrême (figures 5 et 6) décalée par rapport à l'orientation intermédiaire dans le premier sens angulaire, dans laquelle le second évidement chevauche les troisième et quatrième lumières sans que le premier évidement ne chevauche les première et seconde lumières, et
- une seconde orientation extrême (figures 7 et 8) décalée par rapport à l'orientation intermédiaire dans le second sens angulaire, dans laquelle le premier évidement chevauche les première et seconde lumières sans que le second évidement ne chevauche les troisième et quatrième lumières.

Les orientations extrêmes de préférence sensiblement symétriques par rapport à l'orientation intermédiaire, avec un écart angulaire ici supérieur à 90°, et sensiblement à 110° (à savoir 2 fois 55°).

Les disques 1 et 7 sont avantageusement réalisés en matière céramique, par exemple en une alumine classique pour les disques de robinetterie.

A titre d'exemple les figures 5 et 6 comportent des indications de cotes en millimètres.

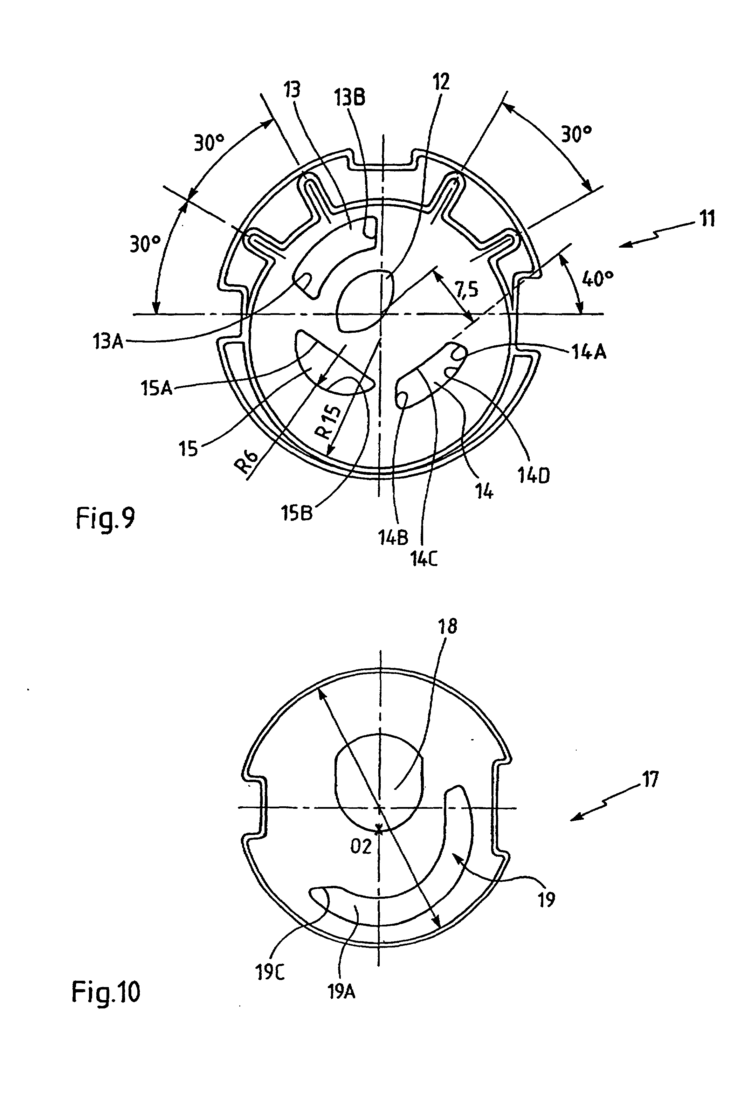

Les figures 9 et 10 représentent, à titre de variante, deux autres premier et second disques 11 et 17 destinés à coopérer. Ils présentent beaucoup d'analogies avec les disques 1 et 7. C'est pourquoi les éléments de ces disques 11 et 17 qui correspondent à des éléments des disques 1 et 7 sont désignés par des signes de référence qui découlent des références des figures 1 et 2 par addition du nombre 10.

Les principales différences entre les deux paires de disques peuvent être identifiées comme suit:
- l'un des bords latéraux 13A de la seconde lumière n'est plus radial mais approximativement parallèle au bord intérieur 15 A de la quatrième lumière 15,
- cette quatrième lumière en portion de lune s'écarte en ses deux extrémités du cercle de référence,
- la troisième lumière 14 a un bord 14B qui n'est plus radial, et sa dimension radiale diminue en direction de l'autre bord 14A, son bord interne 14C est approximativement rectiligne,
- le second évidement 19 est bordé latéralement par des bords sensiblement rectilignes dont l'un, 19C, n'est pas radial et donne au contraire à la zone terminale 19A une forme effilée.

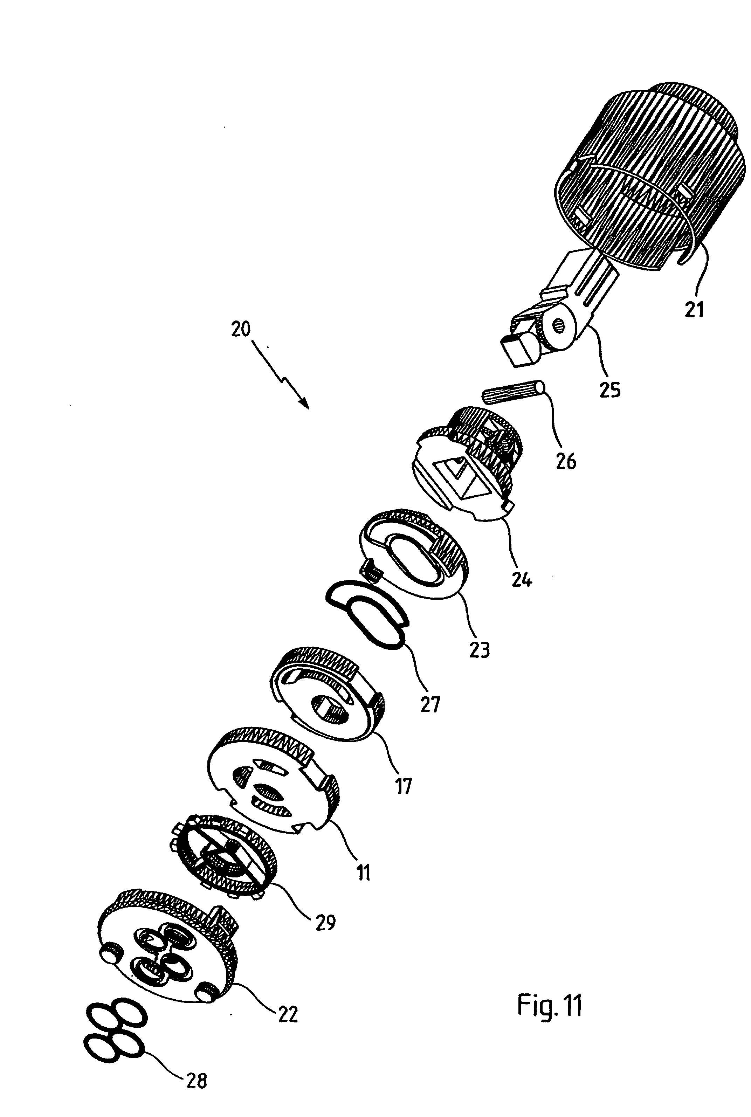

La figure 11 montre à titre d'exemple une perspective éclatée d'une cartouche 20 comportant les disques 11 et 17 des figures 9 et 10. Sa conception d'ensemble, tout à fait classique, se comprend aisément, avec une coiffe de cartouche 21 et un fond (ou « embase ») de cartouche 22 formant conjointement un corps de cartouche, un disque couvre-disque (« entraîneur ») 23, un corps rotatif 24 par rapport au corps 21 et un levier pivotant 25 monté sur un axe 26 lié au corps rotatif servant conjointement à la commande en orientation et en position du disque mobile.

Un joint 27 est prévu entre les éléments 17 et 23, il a une forme correspondant aux évidements du disque 17.

Un autre joint 28 est monté à l'extérieur du fond 22 et sa forme correspond à la géométrie des orifices ménagés dans ce fond.

En outre un élément intermédiaire de distribution 29 est disposé entre le fond 22 et le disque fixe 11.

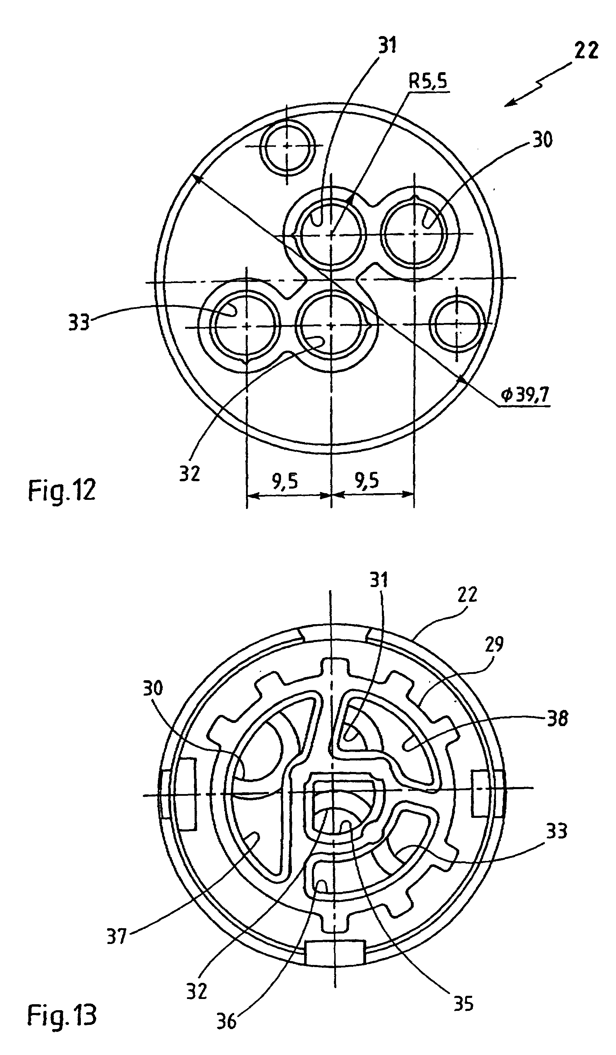

Le fond 22 est représenté plus en détail à la figure 12. On voit qu'il comporte quatre orifices 30, 31, 32 et 33 dont les centres définissent un losange aplati. Des pions 34 sont destinés à permettre un bon positionnement de la cartouche dans un corps de robinet non représenté.

L'élément intermédiaire de distribution 29 est un anneau dans lequel des cloisons délimitent des chambres 35, 36, 37 et 38 de formes voisines des formes des lumières 12 à 15 du disque fixe.

La figure 13 montre comment la superposition de cet élément 29 au fond 22 permet la communication des orifices 30, 31, 32 et 33 avec les lumières 12 à 15 du disque fixe.

Les autres particularités de la cartouche sont classiques et n'ont pas besoin d'être détaillées plus avant.

A titre d'exemple une cartouche conforme à la figure 11, avec des pièces ayant la géométrie des figures 9 et 10, et 12 et 13 (les dimensions peuvent être déduites de ces figures du fait que les figures 9 et 10 sont à la même échelle, et que le disque de la figure 9 a un diamètre maximum de 36,7mm et que le fond de la figure 12 a un diamètre de 39,7mm) a un débit maximum de 12l/mm pour une vitesse d'écoulement de 6,7m/s, un orifice de sortie de diamètre 7mm et une pression de 1bar.

## Revendications

1. Paire de disques de mitigeur à écoulements séparés comportant un premier disque (1, 11) destiné à être fixe et un second disque (7, 17) destiné à être mobile en position et en orientation par rapport à ce premier disque en ayant une surface plane appliquée contre une surface plane de ce premier disque,
ce premier disque étant traversé par de première (2, 12), seconde (3, 13), troisième (4, 14) et quatrième (5, 15) lumières, dont la seconde lumière et la troisième lumière ont des formes circonférentiellement allongées en étant intérieurement tangentes à un premier cercle de référence (C1), et la première lumière est située entre la seconde lumière et la troisième lumière, en étant située radialement entre le centre (O1) de ce premier cercle de référence et cette seconde lumière,
et ce second disque comportant de premier (8, 18) et second (9, 19) évidements débouchant dans la surface plane de ce second disque, en sorte de mettre en communication, ou non, les première et seconde lumières, d'une part, et/ou les troisième et quatrième lumières, d'autre part, en fonction de la position et de l'orientation du second disque,
cette paire de disques étant **caractérisée en ce que** :
- les seconde (3, 13) et troisième (4, 14) lumières sont sensiblement disposées à l'opposé l'une de l'autre par rapport au centre (O1) de ce premier cercle de référence,
- la quatrième lumière (5, 15) a une forme circonférentiellement allongée sensiblement tangente intérieurement à ce premier cercle de référence en étant décalée de la troisième lumière (4, 14) dans un premier sens angulaire,
- les premier et second évidements sont intérieurement tangents à un second cercle de référence (C2), le second évidement (9, 19) ayant une forme circonférentiellement allongée avec une première zone terminale (9A, 19A) et une seconde zone terminale (9B, 19B) décalée de cette première zone terminale dans un second sens angulaire opposé au premier sens angulaire, et le premier évidement (8, 18) s'étendant à partir du centre radialement (O2) de ce second cercle de référence (C2) à l'opposé de la première zone terminale,
ces lumières et ces évidements ayant des dimensions telles qu'il existe, lorsque les premier et second cercles de référence sont concentriques :
- une orientation intermédiaire du disque mobile dans laquelle le premier évidement chevauche radialement les première et seconde lumières et le second évidement chevauche circonférentiellement les troisième et quatrième lumières,
- une première orientation extrême décalée par rapport à l'orientation intermédiaire dans le premier sens angulaire, dans laquelle le second évidement chevauche les troisième et quatrième lumières sans que le premier évidement ne chevauche les première et seconde lumières, et
- une seconde orientation extrême décalée par rapport à l'orientation intermédiaire dans le second sens angulaire, dans laquelle le premier évidement chevauche les première et seconde lumières sans que le second évidement ne chevauche les troisième et quatrième lumières.

2. Paire de disques selon la revendication 1, **caractérisée en ce que** les première et seconde orientations extrêmes ont, par rapport à l'orientation intermédiaire, des écarts angulaires sensiblement égaux.

3. Paire de disques selon la revendication 1 ou la revendication 2, **caractérisée en ce que** les deux cercles de référence (C1, C2) ont des diamètres sensiblement égaux.

4. Paire de disques selon l'une quelconque des revendications 1 à 3, **caractérisée en ce que** le premier cercle de référence (C1) est concentrique au disque fixe, et le second cercle de référence (C2) a un centre décalé par rapport au centre du disque mobile à l'opposé du rayon (R2) selon lequel s'étend le premier évidement.

5. Paire de disques selon l'une quelconque des revendications 1 à 4, **caractérisée en ce que** la première lumière (2, 12) est sensiblement tangente au centre (O1) du premier cercle de référence.

6. Paire de disques selon l'une quelconque des revendications 1 à 5, **caractérisée en ce que** le premier évidement (8, 18) est sensiblement tangent au centre (02) du second cercle de référence.

7. Paire de disques selon l'une quelconque des revendications 1 à 6, **caractérisée en ce que** la première lumière (2, 12) est symétrique par rapport à un rayon (R1) du premier cercle de référence (C1) et la seconde lumière (3, 13) est décalée angulairement par rapport à ce rayon dans le premier sens angulaire.

8. Paire de disques selon la revendication 7, **caractérisée en ce que** la quatrième lumière (5, 15) est délimitée intérieurement par un bord sensiblement parallèle à ce rayon (R1).

9. Paire de disques selon la revendication 7 ou la revendication 8, **caractérisée en ce que** la première lumière (2, 12) est allongée transversalement à ce rayon (R1).

10. Paire de disques selon la revendication 9, **caractérisée en ce que** la première lumière (2, 12) a une forme elliptique dont le petit axe s'étend suivant ledit rayon (R1).

11. Paire de disques selon l'une quelconque des revendications 1 à 10, **caractérisée en ce que** la seconde lumière est délimitée latéralement par des tronçons sensiblement rectilignes dont l'un au moins (3A, 3B, 13B) est sensiblement radial.

12. Paire de disques selon l'une quelconque des revendications 1 à 11, **caractérisée en ce que** la seconde lumière (3, 13) est délimitée intérieurement par un bord sensiblement concentrique au premier cercle de référence.

13. Paire de disques selon l'une quelconque des revendications 1 à 12, **caractérisée en ce que** la troisième lumière (4, 14) est délimitée latéralement par des tronçons sensiblement rectilignes dont l'un au moins (4A, 4B, 14A) est sensiblement radial.

14. Paire de disques selon l'une quelconque des revendications 1 à 13, **caractérisée en ce que** la troisième lumière (4, 14) est délimitée intérieurement par un tronçon sensiblement rectiligne.

15. Paire de disques selon la revendication 14, **caractérisée en ce que** la quatrième lumière (5, 15) a la forme d'une portion de lune et est délimitée extérieurement par un bord qui, au moins à proximité de la troisième lumière, s'écarte du premier cercle de référence vers le tronçon sensiblement rectiligne.

16. Paire de disques selon l'une quelconque des revendications 1 à 15, **caractérisée en ce que** l'amplitude angulaire de la seconde lumière (3, 13) est supérieure à l'amplitude angulaire de la troisième lumière (4, 14).

17. Paire de disques selon l'une quelconque des revendications 1 à 16, **caractérisée en ce que** le premier évidement (8, 18) est sensiblement symétrique par rapport au rayon (R2) le long duquel il s'étend.

18. Paire de disques selon l'une quelconque des revendications 1 à 17, **caractérisée en ce que** le premier évidement (8, 18) comporte des bords latéraux parallèles au rayon le long duquel il s'étend.

19. Paire de disques selon l'une quelconque des revendications 1 à 18, **caractérisée en ce que** le second évidement est délimité latéralement par des bords sensiblement rectilignes dont l'un au moins est sensiblement radial.

20. Paire de disques selon l'une quelconque des revendications 1 à 19, **caractérisée en ce que** les seconde et troisième lumières son décalées, à l'opposé de la quatrième lumière, d'une valeur angulaire d'environ 15° et le second évidement a une amplitude angulaire d'environ 130° à 160°.

21. Paire de disques selon l'une quelconque des revendications 1 à 20, **caractérisée en ce que** la quatrième lumière est décalée angulairement de la seconde lumière d'environ 10° à 20°, et est décalée de la troisième lumière d'environ 10° à 20°.

22. Paire de disques selon l'une quelconque des revendications 1 à 21, **caractérisée en ce que** l'écart angulaire entre les orientations extrêmes du disque mobile est supérieur à 90°.

23. Paire de disques selon la revendication 22, **caractérisée en ce que** cet écart angulaire est de l'ordre de 110°.

24. Paire de disques selon l'une quelconque des revendications 1 à 23, **caractérisée en ce que** le premier sens angulaire est le sens des aiguilles d'une montre et le second sens angulaire est le sens trigonométrique.

25. Cartouche de mitigeur à écoulements séparés comportant un corps de cartouche (21, 22), une paire de disques selon l'une quelconque des revendications 1 à 24, et un ensemble (23, 24, 25, 26) pour la commande en orientation et en position du disque mobile.

## Patentansprüche

1. Scheibenpaar einer Mischbatterie mit getrennten Strömen, mit einer festzusetzenden ersten Scheibe (1, 11) sowie einer im Verhältnis zur ersten Scheibe in ihrer Lage und Stellung zu verstellenden zweiten Scheibe (7, 17), welche eine gegen eine ebenen Fläche der ersten Scheibe angesetzte ebene Fläche hat,
wobei die erste Scheibe von ersten (2, 12), zweiten (3, 13), dritten (4, 14) und vierten (5, 15) Öffnungen durchquert ist, von denen die zweite Öffnung und die dritte Öffnung Umfangsformen haben, welche an einem ersten Referenzkreis (C1) innen tangierend entlang laufen, und die erste Öffnung zwischen der zweiten und der dritten Öffnung liegt und radial zwischen dem Mittelpunkt (O1) des ersten Referenzkreises und der zweiten Öffnung angeordnet ist,
und die zweite Scheibe eine erste (8, 18) und eine zweite Ausnehmung (9, 19) aufweist, welche sich in der ebenen Fläche der zweiten Scheibe öffnen, um entsprechend der Lage und Stellung der zweiten Scheibe mit den ersten und zweiten Öffnungen einerseits und/oder mit den dritten und vierten Öffnungen andererseits in Verbindung zu kommen oder nicht,
wobei das Scheibenpaar **dadurch gekennzeichnet ist, dass**:
die zweite (3, 13) und dritte (4, 14) Öffnung bezüglich des Mittelpunktes (O1) des ersten Referenzkreises einander etwa gegenüber angeordnet sind,
die vierte Öffnung (5, 15) eine Umfangsform hat, welche an dem ersten Referenzkreis etwa innen tangierend entlangläuft, und in einer ersten Winkelrichtung zur dritten Öffnung (4, 14) versetzt ist,
die erste und die zweite Öffnung einen zweiten Referenzkreis (C2) innen tangieren, die zweite Ausnehmung (9, 19) eine längliche Umfangsform mit einem ersten Endabschnitt (9A, 19A) und einem zweiten Endabschnitt (9B, 19B) hat, wobei der erste Endabschnitt in einer zur ersten Winkelrichtung entgegengesetzten zweiten Winkelrichtung versetzt ist, und sich die erste Ausnehmung (8, 18) ausgehend vom radialen Mittelpunkt (02) des zweiten Referenzkreises (C2) entgegengesetzt zum ersten Endabschnitt erstreckt,
die Öffnungen und Ausnehmungen derartige Abmessungen haben, dass, wenn der erste und der zweite Referenzkreis konzentrisch zueinander angeordnet sind,
eine Zwischenstellung der beweglichen Scheibe besteht, in der die erste Ausnehmung die erste und zweite Öffnung radial überlappt sowie die zweite Ausnehmung die dritte und vierte Öffnung in Umfangsrichtung überlappt,
eine zur Zwischenstellung in erster Winkelrichtung gesehen versetzte erste Endstellung besteht, in der die zweite Ausnehmung die dritte und vierte Öffnung überlappt, ohne dass die erste Ausnehmung die ersten und zweite Öffnung überlappt, und
eine zur Zwischenstellung in zweiter Winkelrichtung gesehen versetzte zweite Endstellung besteht, in der die erste Ausnehmung die erste und zweite Öffnung überlappt, ohne dass die zweite Ausnehmung die dritte und vierte Öffnung überlappt.

2. Scheibenpaar nach Anspruch 1, **dadurch gekennzeichnet, dass** die erste und die zweite Endstellung bezogen auf die Zwischenstellung etwa gleiche Winkelabstände haben.

3. Scheibenpaar nach Anspruch 1 oder 2, **dadurch gekennzeichnet, dass** die beiden Referenzkreise (C1, C2) etwa die gleichen Durchmesser haben.

4. Scheibenpaar nach einem der Ansprüche 1 bis 3, **dadurch gekennzeichnet, dass** der erste Referenzkreis (C1) zur feststehenden Scheibe konzentrisch ist und der zweite Referenzkreis (C2) ein gegenüber dem Mittelpunkt der verstellbaren Scheibe entgegengesetzt zu der Geraden (R2), in den sich die erste Ausnehmung erstreckt, versetzten Mittelpunkt hat.

5. Scheibenpaar nach einem der Ansprüche 1 bis 4, **dadurch gekennzeichnet, dass** die erste Öffnung (2, 12) den Mittelpunkt (O1) des ersten Referenzkreises etwa tangiert.

6. Scheibenpaar nach einem der Ansprüche 1 bis 5, **dadurch gekennzeichnet, dass** die erste Ausnehmung (8, 18) den Mittelpunkt (O2) des zweiten Referenzkreises etwa tangiert.

7. Scheibenpaar nach einem der Ansprüche 1 bis 6, **dadurch gekennzeichnet, dass** das die erste Öffnung (2, 12) symmetrisch bezüglich einer Geraden (R1) des ersten Referenzkreises (C1) angeordnet ist und die zweite Öffnung (3, 13) bezüglich der Geraden in die erste Winkelrichtung gesehen winkelförmig versetzt ist.

8. Scheibenpaar nach Anspruch 7, **dadurch gekennzeichnet, dass** die vierte Öffnung (5, 15) innen von einer etwa parallel zu der Geraden (R1) verlaufenden Kante begrenzt ist.

9. Scheibenpaar nach Anspruch 7 oder nach Anspruch 8, **dadurch gekennzeichnet, dass** die erste Öffnung (2, 12) sich quer zu der Geraden (R1) erstreckt.

10. Scheibenpaar nach Anspruch 9, **dadurch gekennzeichnet, dass** die erste Öffnung (2, 12) eine elliptische Form hat, wobei die Nebenachse der Geraden (R1) folgt.

11. Scheibenpaar nach einem der Ansprüche 1 bis 10, **dadurch gekennzeichnet, dass** die zweite Öffnung seitlich von etwa geradlinig verlaufenden Abschnitten begrenzt ist, von denen mindestens einer (3A, 3B, 13B) etwa radial verläuft.

12. Scheibenpaar nach einem der Ansprüche 1 bis 11, **dadurch gekennzeichnet, dass** die zweite Öffnung (3, 13) innen von einer etwa konzentrisch zum ersten Referenzkreis verlaufenden Kante begrenzt ist.

13. Scheibenpaar nach einem der Ansprüche 1 bis 12, **dadurch gekennzeichnet, dass** die dritte Öffnung (4, 14) seitlich von etwa geradlinig verlaufenden Abschnitten begrenzt ist, von denen mindestens einer (4A, 4B, 14A) etwa radial verläuft.

14. Scheibenpaar nach einem der Ansprüche 1 bis 13, **dadurch gekennzeichnet, dass** die dritte Öffnung (4, 14) von einem etwa geradlinig verlaufenden Abschnitt begrenzt ist.

15. Scheibenpaar nach Anspruch 14, **dadurch gekennzeichnet, dass** die vierte Öffnung (5, 15) die Form eines Mondabschnittes hat und an den Enden durch eine Kante begrenzt ist, welche nahe der dritten Öffnung mit Abstand zum ersten Referenzkreis in Richtung zu dem etwa geradlinigen Abschnitt verläuft.

16. Scheibenpaar nach einem der Ansprüche 1 bis 15, **dadurch gekennzeichnet, dass** die Winkellänge der zweiten Öffnung (3, 13) größter ist als die Winkellänge der dritten Öffnung (4, 14).

17. Scheibenpaar nach einem der Ansprüche 1 bis 16, **dadurch gekennzeichnet, dass** das die erste Ausnehmung (8, 18) etwa symmetrisch zu der Geraden (R2) angeordnet ist, in deren Länge sie sich erstreckt.

18. Scheibenpaar nach einem der Ansprüche 1 bis 17, **dadurch gekennzeichnet, dass** die erste Ausnehmung (8, 18) zwei seitliche Kanten aufweist, die parallel zu der Geraden verlaufen, in deren Länge sie sich erstreckt.

19. Scheibenpaar nach einem der Ansprüche 1 bis 18, **dadurch gekennzeichnet, dass** die zweite Ausnehmung seitlich von etwa geradlinigen Kanten begrenzt ist, von denen mindestens eine radial verläuft.

20. Scheibenpaar nach einem der Ansprüche 1 bis 19, **dadurch gekennzeichnet, dass** die zweite und die dritte Öffnung gegenüber der vierten Öffnung um einen Winkelbetrag von etwa 15° versetzt sind und die zweite Ausnehmung eine Winkellänge von etwa 130° bis 160° hat.

21. Scheibenpaar nach einem der Ansprüche 1 bis 20, **dadurch gekennzeichnet, dass** die vierte Öffnung gegenüber der zweiten Öffnung um etwa 10° bis 20° winkelversetzt und gegenüber der dritten Öffnung um etwa 10° bis 20° versetzt ist.

22. Scheibenpaar nach einem der Ansprüche 1 bis 21, **dadurch gekennzeichnet, dass** der Winkelabstand zwischen den beiden Endstellungen der verstellbaren Scheibe größer als 90° ist.

23. Scheibenpaar nach Anspruch 22, **dadurch gekennzeichnet, dass** der Winkelabstand in der Größenordnung von 110° liegt.

24. Scheibenpaar nach einem der Ansprüche 1 bis 23, **dadurch gekennzeichnet, dass** die erste Winkelrichtung der Uhrzeigersinn und die zweite Winkelrichtung die Richtung entgegen dem Uhrzeigersinn ist.

25. Mischpatrone für getrennte Ströme, mit einem Patronenkörper (21, 22), einem Scheibenpaar nach einem der vorhergehenden Ansprüche 1 bis 24 sowie einer Anordnung (23, 24, 25, 26) zum Einstellen der Stellung und Lage der verstellbaren Scheibe.

## Claims

1. A pair of bi-flow mixer tap discs comprising a first disc (1, 11) adapted to be fixed and second disc (7, 17) adapted to be mobile in position and in orientation relative to the first disc and having a plane surface adapted to be pressed against a plane surface of the first disc,
the first disc having first (2, 12), second (3, 13), third (4, 14) and fourth (5, 15) apertures through it, the second and third apertures being of circumferentially elongate shape and internally tangential to a first reference circle (C1) and the first aperture being between the second aperture and the third aperture, and being radially between the centre (O1) of the first reference circle and the second aperture,
and the second disc comprising first (8, 18) and second (9, 19) openings that open onto the plane surface of the second disc to establish or not to establish communication between the first and second apertures, on the one hand, and/or the third and fourth apertures, on the other hand, depending on the position and the orientation of the second disc,
the pair of discs being **characterized in that**:
- the second (3, 13) and third (4, 14) apertures are substantially opposite each other relative to the centre (O1) of the first reference circle,
- the fourth aperture (5, 15) is of circumferentially elongate shape substantially tangential internally to the first reference circle and offset from the third aperture (4, 14) in a first angular direction,
- the first and second openings are internally tangential to a second reference circle (C2), the second opening (9, 19) having a circumferentially elongate shape with a first terminal area (9A, 19A) and a second terminal area (9B, 19B) offset from the first terminal area in a second angular direction opposite the first angular direction and the first opening (8, 18) extending from the centre (O2) of the second reference circle C2 in the radial direction away from the first terminal area,
the apertures and the openings have dimensions such that when the first and second reference circles are concentric:
- there is an intermediate orientation of the mobile disc in which the first opening radially overlaps the first and second apertures and the second opening circumferentially overlaps the third and fourth apertures,
- there is a first extreme orientation offset relative to the intermediate orientation in the first angular direction in which the second opening overlaps the third and fourth apertures without the first opening overlaping the first and second apertures, and
- there is a second extreme orientation offset relative to the intermediate orientation in the second angular direction in which the first opening overlaps the first and second apertures without the second opening overlapping the third and fourth apertures.

2. A pair of discs according to claim 1, **characterized in that** the first and second extreme orientations have substantially equal angular offsets relative to the intermediate orientation.

3. A pair of discs according to claim 1 or claim 2, **characterized in that** the two reference circles (C1, C2) have substantially equal diameters.

4. A pair of discs according to any one of claims 1 to 3, **characterized in that** the first reference circle (C1) is concentric with the fixed disc and the second reference circle (C2) has a centre offset relative to the centre of the mobile disc on the side opposite the radius (R2) along which the first opening extends.

5. A pair of discs according to any one of claims 1 to 4, **characterized in that** the first aperture (2, 12) is substantially tangential to the centre (O1) of the first reference circle.

6. A pair of discs according to any one of claims 1 to 5, **characterized in that** the first opening (8, 18) is substantially tangential to the centre (O2) of the second reference circle.

7. A pair of discs according to any one of claims 1 to 6, **characterized in that** the first aperture (2, 12) is symmetrical relative to a radius (R1) of the first reference circle (C1) and the second aperture (3, 13) is offset angularly relative to said radius in the first angular direction.

8. A pair of discs according to claim 7, **characterized in that** the fourth aperture (5, 15) is delimited internally by an edge substantially parallel to said radius (R1).

9. A pair of discs according to claim 7 or claim 8, **characterized in that** the first aperture (2, 12) is elongate transversely to said radius (R1).

10. A pair of discs according to claim 9, **characterized in that** the first aperture (2, 12) has an elliptical shape with the minor axis along said radius (R1).

11. A pair of discs according to any one of claims 1 to 10, **characterized in that** the second aperture is delimited laterally by substantially rectilinear sections at least one (3A, 3B, 13B) of which is substantially radial.

12. A pair of discs according to any one of claims 1 to 11, **characterized in that** the second aperture (3, 13) is delimited internally by an edge substantially concentric with the first reference circle.

13. A pair of discs according to any one of claims 1 to 12, **characterized in that** the third aperture (4, 14) is delimited laterally by substantially rectilinear sections at least one (4A, 4B, 14A) of which is substantially radial.

14. A pair of discs according to any one of claims 1 to 13, **characterized in that** the third aperture (4, 14) is delimited internally by a substantially rectilinear section.

15. A pair of discs according to claim 14,
**characterized in that** the fourth aperture (5, 15) is part-moon shape and is delimited externally by an edge which at least near the third aperture diverges from the first reference circle towards the substantially rectilinear section.

16. A pair of discs according to any one of claims 1 to 15, **characterized in that** the angular amplitude of the second aperture (3, 13) is greater than the angular amplitude of the third aperture (4, 14).

17. A pair of discs according to any one of claims 1 to 16, **characterized in that** the first opening (8, 18) is substantially symmetrical relative to the radius (R2) along which it extends.

18. A pair of discs according to any one of claims 1 to 17, **characterized in that** the first opening (8, 18) comprises lateral edges parallel to the radius along which it extends.

19. A pair of discs according to any one of claims 1 to 18, **characterized in that** the second opening is delimited laterally by substantially rectilinear edges at least one of which is substantially radial.

20. A pair of discs according to any one of claims 1 to 19, **characterized in that** the second and third apertures are angularly offset from the fourth aperture by approximately 15° and the second opening has an angular amplitude in the range approximately 130° to approximately 160°.

21. A pair of discs according to any one of claims 1 to 20, **characterized in that** the fourth aperture is offset angularly from the second aperture by approximately 10° to 20°, and is offset from the third aperture by approximately 10° to 20°.

22. A pair of discs according to any one of claims 1 to 21, **characterized in that** the angular offset between the extreme orientations of the mobile disc is greater than 90°.

23. A pair of discs according to claim 22, **characterized in that** said angular offset is of the order of 110°.

24. A pair of discs according to any one of claims 1 to 23, **characterized in that** the first angular direction is the clockwise direction and the second angular direction is the anticlockwise direction.

25. A bi-flow mixer tap cartridge comprising a cartridge body (21, 22), a pair of discs according to any one of claims 1 to 24, and a system (23, 24, 25, 26) for controlling the orientation and the position of the mobile disc.
